(19) Europäisches Patentamt
European Patent Office
Office européen des brevets

(11) Veröffentlichungsnummer: **0 034 271**
**B1**

(12) **EUROPÄISCHE PATENTSCHRIFT**

(45) Veröffentlichungstag der Patentschrift: **20.07.83**

(51) Int. Cl.³: **C 09 B 29/085** // D06P3/54

(21) Anmeldenummer: **81100529.7**

(22) Anmeldetag: **24.01.81**

(54) **Farbstoffmischungen und ihre Verwendung zum Färben von Polyestern.**

(30) Priorität: **08.02.80 DE 3004652**

(43) Veröffentlichungstag der Anmeldung: **26.08.81 Patentblatt 81/34**

(45) Bekanntmachung des Hinweises auf die Patenterteilung: **20.07.83 Patentblatt 83/29**

(84) Benannte Vertragsstaaten: **CH DE FR GB IT LI**

(56) Entgegenhaltungen:
**FR-A-1 217 269**
**GB-A-978 544**
**GB-A-1 148 672**
**JP-A-73 017 618**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Hansen, Günter, Dr., Alwin-Mittasch-Platz 8, D-6700 Ludwigshafen (DE)**
Erfinder: **Kermer, Wolf-Dieter, Dr., Im Schlittweg 4, D-6701 Fussgönheim (DE)**
Erfinder: **Stuck, Jochen-Wilfried, Lorscher Ring 2A, D-6710 Frankenthal (DE)**

**EP 0 034 271 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Farbstoffmischungen und ihre Verwendung zum Färben von Polyestern

Die Erfindung betrifft Farbstoffmischungen, die als Komponenten Farbstoffe der Formel I

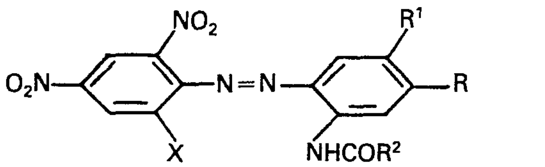 I

enthalten, wobei

X Wasserstoff, Chlor oder Brom,

$R^1$ Wasserstoff, Methoxy, Äthoxy oder Phenoxy

$R^2$ Wasserstoff, Methyl, Äthyl oder n- oder iso-Propyl und

R einen Rest der Formel

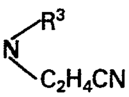 , 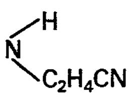 , 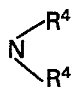 oder 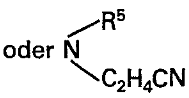

bedeuten, wobei

$R^3$ Allyl, Methallyl, Crotonyl, Prenyl oder Benzyl,

$R^4$ $C_1$- bis $C_5$-Alkyl, Allyl, Methallyl, Crotonyl, Prenyl oder Benzyl und

$R^5$ $C_1$- bis $C_5$-Alkyl sind und wobei die Farbstoffmischungen mindestens 60% an Farbstoffen mit

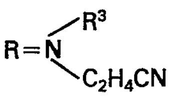 und $NHC_2H_4CN$

0 bis 40% eines oder mehrerer Farbstoffe mit

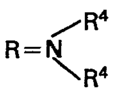 und

0 bis 40% eines oder mehrerer Farbstoffe mit

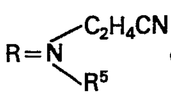 enthalten, wobei die beiden letztgenannten Komponenten zu mindestens 5% im Gemisch vorliegen.

Zur Herstellung der Farbstoffmischungen kann man die Einzelkomponenten mechanisch mischen oder eine Mischkupplung durchführen. Einzelheiten der Herstellung können den Beispielen entnommen werden, in denen sich Angaben über Teile und Prozente, sofern nicht anders vermerkt, auf das Gewicht beziehen.

Die erfindungsgemässen Farbstoffmischungen eignen sich zum Färben von Synthesefasern, insbesondere linearen Polyestern in dunkelblauen Tönen. Sie zeichnen sich durch hervorragendes färberisches Verhalten, insbesondere Temperaturunabhängigkeit des Aufziehverhaltens, gute Baderschöpfung und gutes Aufbauvermögen bis zu hohen Farbtiefen sowie sehr hohe Farbstärke aus. Die Echtheitseigenschaften der Färbungen entsprechen weitgehend denen der Einzelkomponenten.

Bevorzugte Mischungen enthalten 65 bis 95% eines oder mehrerer Farbstoffe der Formel I mit

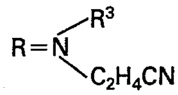 und 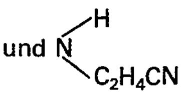

0 bis 35% eines oder mehrerer Farbstoffe der Formel I mit

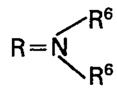 , wobei $R^6$ $C_1$–$C_5$-Alkyl oder Allyl ist, und

0 bis 35% eines oder mehrerer Farbstoffe der Formel I mit

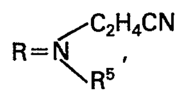 , wobei die beiden letztgenannten Komponenten zusammen zu 5 bis 35% im Gemisch vorliegen.

Von besonderer technischer Bedeutung sind Farbstoffmischungen, die als Komponenten Farbstoffe der Formel II

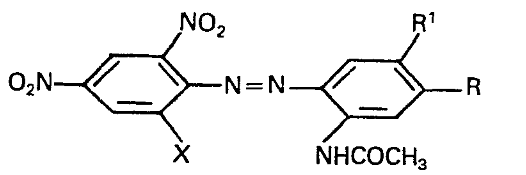 II

enthalten, wobei X und $R^1$ die angegebene Bedeutung haben und die Mischung 65 bis 95% eines oder mehrerer Farbstoff-Paare der Formel II mit

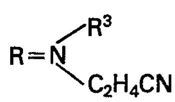 und 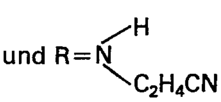 ,

die bezüglich X und $R^1$ übereinstimmen und 5 bis 35% eines oder mehrerer Farbstoffe der Formel II mit

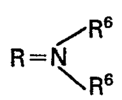 oder 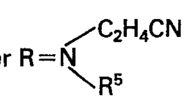 enthält, wobei der Anteil an Farbstoffen der Formel II mit

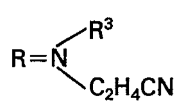 mindestens 40% beträgt.

Gegenüber Farbstoffmischungen, die aus der GB-A-978 544 und JA-A-73/17 618 bekannt sind, zeichnen sich die erfindungsgemässen Mischungen überraschenderweise durch eine beträchtlich erhöhte Farbstärke und bessere Schweissechtheit nachfixierter Färbungen aus.

Beispiel 1

a) 262 Teile 6-Brom-2,4-Dinitroanilin werden in 2000 Teile konzentrierte Schwefelsäure eingetragen. Unter Rühren und Kühlung lässt man bei 5 bis 15 °C 320 Teile Nitrosylschwefelsäure (11,5% $N_2O_3$) langsam zulaufen und rührt mindestens 3 Stunden bei 10 °C bis 15 °C nach.

b) 233 Teile 2-(N-β-Cyanäthylamino)-4-acetanisidin werden in 450 Teilen Essigsäure warm gelöst und in ein Gemisch von 2000 Teilen Wasser, 300 Volumenteilen konzentrierter Salzsäure, 10 Teilen Amidosulfonsäure und 10 Teilen eines Diisobutylnaphthalin-1-sulfonsäure-Gemisches gegeben. Man fügt 4000 Teile Eis hinzu und lässt unter gutem Rühren die unter a) bereitete Diazoniumsalzlösung bei −5 bis +3 °C langsam zulaufen. Durch Zugabe von Natriumacetat oder -formiat bis zu einem pH-Wert von 3 wird die Umsetzung vervollständigt. Der erhaltene Farbstoff wird bei Raumtemperatur oder erhöhter Temperatur abgesaugt, mit Wasser neutral und salzfrei gewaschen und getrocknet. Man erhält etwa 460 Teile eines violettschwarzen Pulvers der Formel

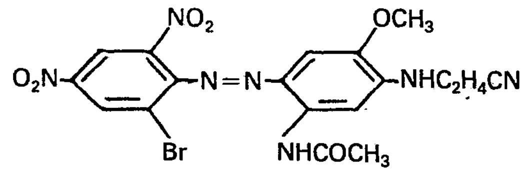,

mit dem man auf Polyesterfasern blauviolette Färbungen von geringer Farbtiefe erhält.

c) Aus 273 Teilen 2-(N-Allyl-N-β-cyanäthyl-amino)-4-acetanisidin erhält man analog Beispiel 1 b) 495 Teile des Farbstoffs der Formel

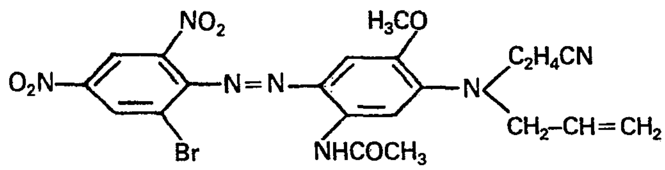

Mit diesem Farbstoff erhält man auf Polyesterfasern blaue Färbungen mit guter Licht-, Thermofixier-, Schweiss- und Waschechtheit. Der Farbstoff zeigt jedoch ein schlechtes Aufbauvermögen und eine starke Abhängigkeit der Farbtiefe von der Tempertur im Färbebad im Bereich von 120 bis 140 °C.

d) Aus 236 Teilen 2-Diäthylamino-4-acetanisidin erhält man analog Beispiel 1 b) 365 Teile des Farbstoffs der Formel

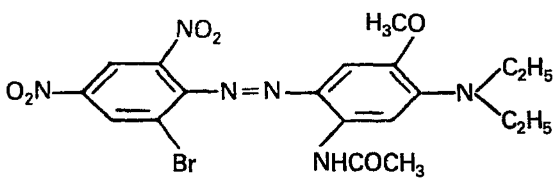,

mit dem man Polyesterfasern grünstichig blau färben kann.

e) Polyestergewebe wird nach dem HT-Verfahren mit einer Farbstoffmischung gefärbt, die aus 40 Teilen des unter 1 b) hergestellten Farbstoffs, 50Teilen des unter1c)hergestellten Farbstoffs und 10 Teilen des unter 1 d) hergestellten Farbstoffs besteht. Dabei wird das Farbstoffgemisch zweckmässigerweise als Dispergiermittel enthaltende feindisperse Zubereitung eingesetzt.

Man erhält farbstarke, egale Marineblau-Färbungen mit gutem Echtheitsniveau. Im HT-Bereich von 125 bis 135 °C ist die Farbtiefe nur wenig von der Temperatur abhängig. Die Farbstoffmischung zeigt auch bei tiefen Marineblau-Färbungen noch ein gutes Badausziehvermögen und einen guten Farbaufbau.

Beispiel 2

262 Teile 6-Brom-2,4-dinitro-anilin werden wie unter 1 a) diazotiert und analog 1 b) auf eine Mischung von 24,4 Teilen 2-Diäthylamino-4-acetanisidin, 96,9 Teilen 2-(N-β-Cyanäthyl-amino)-4-acetanisidin und 131,6 Teilen 2-(N-Allyl-N-β-cyanäthyl-amino)-4-acetanisidin gekuppelt.

Man erält einen Mischfarbstoff, der der in Beispiel 1 e) hergestellten mechanischen Mischung in der chemischen Zusammensetzung entspricht.

Der Mischfarbstoff wird nach bekannten Methoden in eine Farbstoffzubereitung überführt und zum Färben von Polyestern verwendet. Dabei werden die gleichen coloristischen Ergebnisse wie bei Beispiel 1 e) erzielt.

Beispiel 3

Polyestergewebe wird mit einer Mischung aus 70 Teilen des Farbstoffs aus Beispiel 1 c), 15 Teilen des Farbstoffs aus Beispiel 1 b) und 15 Teilen des Farbstoffs der Formel

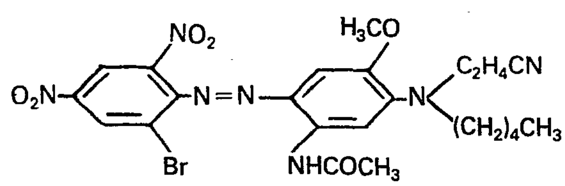

(DE-A-707 711, Beispiel 5)

gefärbt. Man erhält farbstarke, egale Marineblau-Färbungen mit guten Echtheiten. Die Mischung zeigt ein gutes Aufbauverhalten bis zu tiefen Marineblau-Tönen.

Farbton und Farbtiefe werden beim HT-Verfahren durch Tempertur- oder pH-Wert-Schwankungen im Färbebad nur wenig beeinflusst.

Beispiel 4

217,5 Teile 6-Chlor-2,4-dinitro-anilin werden analog Beispiel 1 a) diazotiert und analog Beispiel

1 b) auf eine Mischung von 25,4 Teilen 2-Diäthylamino-4-acetanisidin, 51,9 Teilen 2-(N-β-Cyan-äthyl-amino)-4-acet-phenetidin, 167 Teilen 2-(N-Allyl-N-β-cyan-äthylamino)-4-acetphenetidin und 26,6 Teilen 2-(N-Äthyl-N-β-cyanäthyl-amino)-4-acetanisidin gekuppelt. Man erhält 445 Teile eines dunkel gefärbten Farbstoffpulvers, das Polyesterfasern marineblau färbt. Die Färbungen haben gute Licht-, Schweiss-, Wasch- und Thermofixierechtheiten. Die Farbstoff-Mischung zeigt ein gutes färberisches Verhalten, insbesondere ein gutes Aufbauvermögen sowie ein im Bereich von 125 bis 135 °C wenig temperaturabhängiges Ziehvermögen.

Die in der folgenden Tabelle aufgeführten Farbstoff-Gemische werden analog Beispiel 1 bis 4 erhalten und zeigen ähnliche coloristische Eigenschaften.

| Bsp. | % | X | $R^1$ | $R^2$ | R | Herstellung analog Bsp. |
|---|---|---|---|---|---|---|
| | 40 | Cl | $OCH_3$ | $C_2H_5$ | $NH-C_2H_4CN$ | |
| 5 | 40 | Cl | $OCH_3$ | $C_2H_5$ | 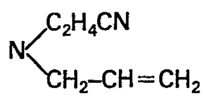 | 1 (mechanische Mischung) |
| | 20 | Cl | $OCH_3$ | $C_2H_5$ | $N(CH_3)_2$ | |
| | 30 | Br | $OC_2H_5$ | H | $NH-C_2H_4CN$ | |
| 6 | 40 | Br | $OC_2H_5$ | $CH_3$ | 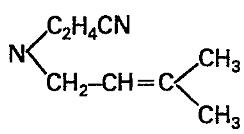 | 2 (Mischkupplung) |
| | 30 | Br | $OC_2H_5$ | H | $N(C_3H_9)_2$ | |
| | 30 | Cl | $OCH_3$ | $CH_3$ | $NH-C_2H_4CN$ | |
| 7 | 45 | Br | $OCH_3$ | $CH_3$ | 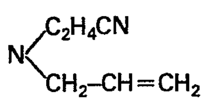 | 1 |
| | 25 | Br | $OCH_3$ | $CH_3$ | $N(CH_2-CH=CH_2)_2$ | |
| | 50 | Cl | $OC_2H_5$ | $CH_3$ | $NH-C_2H_4CN$ | |
| 8 | 40 | Cl | $OC_2H_5$ | $CH_3$ | 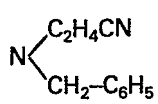 | 1 |
| | 10 | Br | $OC_2H_5$ | $CH_3$ | $N(C_2H_5)_2$ | |
| | 20 | Br | $OCH_3$ | $CH_3$ | $NH-C_2H_4CN$ | |
| 9 | 60 | Cl | $OCH_3$ | $CH_3$ | 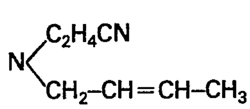 | 1 |
| | 20 | Cl | $OCH_3$ | $CH_3$ | $N(CH_2-CH=CH_2)_2$ | |
| | 45 | Cl | $OCH_3$ | $CH_3$ | $NH-C_2H_4CN$ | |
| 10 | 40 | Cl | $OCH_3$ | $CH_3$ | 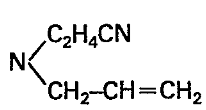 | 2 |
| | 15 | Cl | $OCH_3$ | $CH_3$ | $N(C_2H_5)_2$ | |

| Bsp. | % | X | $R^1$ | $R^2$ | R | Herstellung analog Bsp. |
|---|---|---|---|---|---|---|
| | 20 | Br | $OCH_3$ | $CH_3$ | $NH–C_2H_4CN$ | |
| 11 | 65 | Br | $OCH_3$ | $CH_3$ | 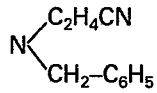 | 2 |
| | 15 | Br | $OCH_3$ | $CH_3$ | 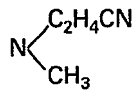 | |
| | 30 | Cl | $OCH_3$ | $CH_3$ | $NH–C_2H_4CN$ | |
| 12 | 40 | Cl | $OCH_3$ | $CH_3$ | 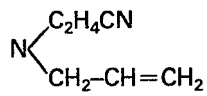 | 2 |
| | 20 | Cl | $OCH_3$ | $CH_3$ | 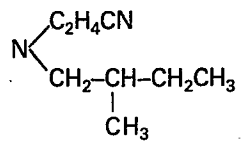 | |
| | 10 | Cl | $OCH_3$ | $CH_3$ | $N(C_2H_5)_2$ | |
| | 20 | Br | $OCH_3$ | $CH_3$ | $NH–C_2H_4CN$ | |
| 13 | 40 | Cl | $OCH_3$ | $CH_3$ | 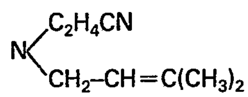 | 1 |
| | 30 | Cl | $OCH_3$ | $CH_3$ | 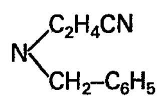 | |
| | 10 | Br | $OCH_3$ | $CH_3$ | $N(C_2H_5)_2$ | |
| | 10 | Cl | $OCH_3$ | $CH_3$ | $NHC_2H_4CN$ | 1 |
| 14 | 80 | Cl | $OCH_3$ | $CH_3$ | 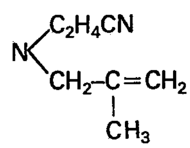 | Mischkupplung |
| | 10 | Br | $OCH_3$ | $CH_3$ | $N(C_2H_5)_2$ | Dritte Komponente mechanisch beigemischt |
| | 10 | Br | $OCH_3$ | $CH_3$ | $NHC_2H_4CN$ | |
| 15 | 80 | Br | $OCH_3$ | $CH_3$ | 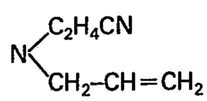 | 1 |
| | 10 | Br | $OCH_3$ | $CH_3$ | $N(C_2H_5)_2$ | |
| | 10 | Cl | $OCH_3$ | $CH_3$ | $NHC_2H_4CN$ | |
| 16 | 75 | Cl | $OCH_3$ | $CH_3$ | 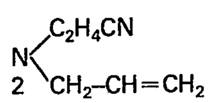 | 2 |
| | 15 | Cl | $OCH_3$ | $CH_3$ | 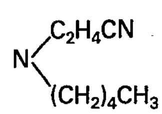 | |

**Patentansprüche**

1. Farbstoffmischungen, die als Komponenten Farbstoffe der Formel I

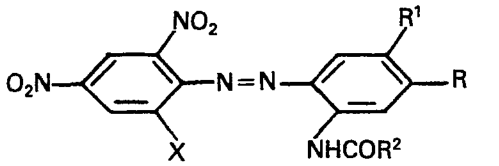
I

enthalten, wobei

X Wasserstoff, Chlor oder Brom,

$R^1$ Wasserstoff, Methoxy, Äthoxy oder Phenoxy

$R^2$ Wasserstoff, Methyl, Äthyl oder n- oder iso-Propyl und

R einen Rest der Formel

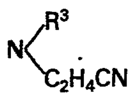, 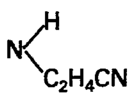, 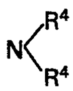 oder 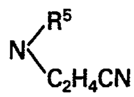

bedeuten, wobei

$R^3$ Allyl, Methallyl, Crotonyl, Prenyl oder Benzyl,

$R^4$ $C_1$- bis $C_6$-Alkyl, Allyl, Methallyl, Crotonyl, Prenyl oder Benzyl und

$R^5$ $C_1$- bis $C_5$-Alkyl sind und wobei die Farbstoffmischungen mindestens 60% an Farbstoffen mit

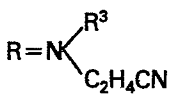 und $NHC_2H_4CN$

0 bis 40% eines oder mehrerer Farbstoffe mit

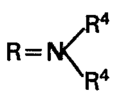 und

0 bis 40% eines oder mehrerer Farbstoffe mit

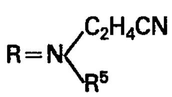 enthalten, wobei die beiden letztgenannten Komponenten zu mindestens 5% im Gemisch vorliegen.

2. Farbstoffmischungen gemäss Anspruch 1, enthaltend 65 bis 95% eines oder mehrerer Farbstoffe der Formel I mit

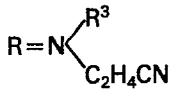 und 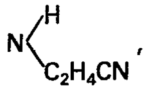,

0 bis 35% eines oder mehrerer Farbstoffe der Formel I mit

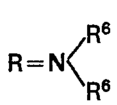, wobei $R^6$ $C_1$–$C_5$-Alkyl oder Allyl ist, und

0 bis 35% eines oder mehrerer Farbstoffe der Formel I mit

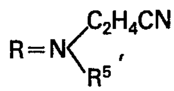, wobei die beiden letztgenannten Komponenten zusammen zu 5 bis 35% im Gemisch vorliegen.

3. Verwendung der Farbstoffmischungen gemäss Anspruch 1 oder 2 zum Färben von Textilmaterial aus Polyestern.

**Revendications**

1. Mélanges de colorants qui contiennent, en tant qu'éléments constituants, des colorants de formule I

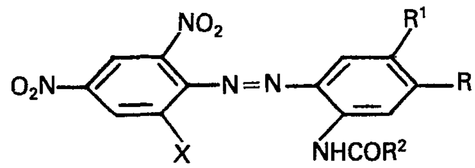
I

dans laquelle les symboles ont les significations suivantes:

X = Hydrogène, chlore ou brome,

$R^1$ = Hydrogène, méthoxy, éthoxy ou phénoxy,

$R^2$ = Hydrogène, méthyle, éthyle, n- ou isopropyle et

R = Radical de formule

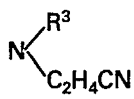, 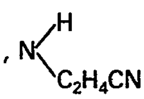, 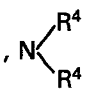 ou 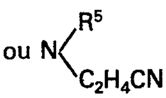,

avec:

$R^3$ = Allyl, méthallyle, crotonyle, prényle ou benzyle,

$R^4$ = Alcoyle en $C_1$ à $C_5$, allyl, méthallyle, crotonyle, prényle ou benzyle et

$R^5$ = Alcoyle en $C_1$ à $C_5$,

ces mélanges de colorants contenant au moins 60% de colorants avec

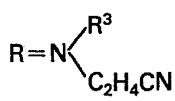 et $NHC_2H_4CN$,

0 à 40% d'un ou de plusieurs colorants avec

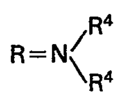 et

0 à 40% d'un ou de plusieurs colorants avec

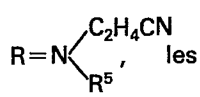, les deux éléments constituants mentionnés en dernier lieu étant présents dans le mélanges à raison d'au moins 5%.

2. Mélanges de colorants selon la revendication 1, contenant 65 à 95% d'un ou de plusieurs colorants de formule I avec

 et ,

0 à 35% d'un ou de plusieurs colorants de formule I avec

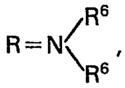, $R^6$ étant un alcoyle en $C_1$ à $C_5$ ou un allyle, et

0 à 35% d'un ou de plusieurs colorants de formule I avec

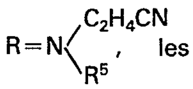, les deux éléments constituants mentionnés en dernier lieu étant présents dans le mélange à raison de 5 à 35% au total.

3. Utilisation de mélanges de colorants selon la revendication 1 ou 2 pour la teinture de matière textiles en polyesters.

**Claims**

1. A dye mixture, containing dyes of the formula I

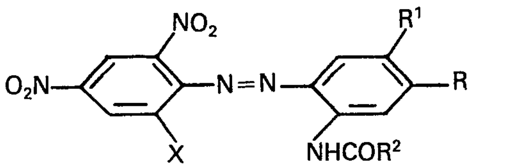 I

where

X is hydrogen, chlorine or bromine,

$R^1$ is hydrogen, methoxy, ethoxy or phenoxy,

$R^2$ is hydrogen, methyl, ethyl, n-propyl or isopropyl and

R is

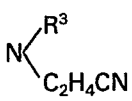, 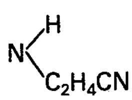, 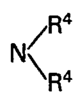 or 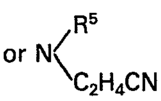

where

$R^3$ is allyl, methallyl, crotonyl, prenyl or benzyl,

$R^4$ is $C_1$–$C_5$-alkyl, allyl, methallyl, crotonyl, prenyl or benzyl and

$R^5$ is $C_1$–$C_5$-alkyl,

the mixture containing not less than 60% of dyes wherein R is

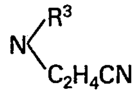 or $NHC_2H_4CN$,

from 0 to 40% of one or more dyes wherein R is

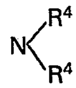

and from 0 to 40% of one or more dyes wherein R is

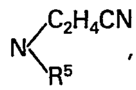,

the two last-mentioned components accounting for not less than 5% of the mixture.

2. A dye misture as claimed in claim 1, which contains from 65 to 95% of one or more dyes of the formula I, wherein R is

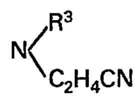 or 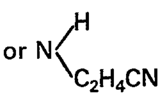,

from 0 to 35% of one or more dyes of the formula I, wherein R is

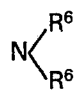, $R^6$ begin $C_1$–$C_5$-alkyl or allyl, and

from 0 to 35% of one or more dyes of the formula I, wherein R is

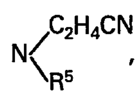, the two last-mentioned components together accounting for from 5 to 35% of the mixture.

3. The use of a dye mixture as claimed in claim 1 or 2 for dyeing textile material.